Europäisches Patentamt

(19) European Patent Office

Office européen des brevets

(11) Veröffentlichungsnummer: **0 090 387**
**B1**

(12) **EUROPÄISCHE PATENTSCHRIFT**

(45) Veröffentlichungstag der Patentschrift:
**17.09.86**

(21) Anmeldenummer: **83103024.2**

(22) Anmeldetag: **26.03.83**

(51) Int. Cl.⁴: **C 08 L 21/00** // (C08L21/00,
61:04)

(54) Kautschukvulkanisate mit relativ niedriger Härte, Verfahren zur Herstellung von Vulkanisaten mit Shore A Härten unter 65 Grad, in denen bei dynamischer Verformung nur ein verminderter Energieanteil in Wärme umgewandelt wird, sowie technische Gummimischungen und Reifen.

(30) Priorität: **31.03.82 DE 3211917**

(43) Veröffentlichungstag der Anmeldung:
**05.10.83 Patentblatt 83/40**

(45) Bekanntmachung des Hinweises auf die Patenterteilung:
**17.09.86 Patentblatt 86/38**

(84) Benannte Vertragsstaaten:
**AT BE CH DE FR GB IT LI LU**

(56) Entgegenhaltungen:
**EP - A - 0 013 330**
**EP - A - 0 036 515**
**BE - A - 679 702**
**DE - A - 2 941 701**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT,**
**Postfach 80 03 20, D-6230 Frankfurt am Main 80 (DE)**

(72) Erfinder: **Die Erfinder haben auf ihre Nennung verzichtet**

## Beschreibung

Es ist bekannt und Stand der Technik, dass durch Zusatz von geeigneten Mengen verstärkend wirkender Füllstoff zu Kautschuk Vulkanisate mit «hoher Härte», das bedeutet im folgenden über 65° Shore A, hoher Festigkeit und hohem Spannungswert erhalten werden. Als verstärkend wirkende Füllstoffe werden hauptsächlich unterschiedliche Russtypen verwendet, die in Abhängigkeit von Struktur, Teilchengrösse und aktiver Oberfläche einen unterschiedlichen Effekt hinsichtlich Erhöhung der genannten Eigenschaften bewirken.

Über diese Möglichkeit zur Steigerung von Härte und Spannungswerten hinaus lassen sich noch weitere Steigerungen erzielen, wenn ein Teil des Russes durch ein Phenolharz-Verstärkungsmittel (Novolak) und geeignete Härtungsmittel ersetzt wird. Als Phenolharze sind Novolake und als Härtungsmittel Formaldehyddonatoren wie Hexamethylentetramin und Methylolgruppen enthaltende teil- bzw. vollverätherte Melamin- und Harnstoffharze heute weitverbreitet im Einsatz (DE-A 2 941 701, EP-A 0 013 330, EP-A 0 036 515).

Prozessöle, die im allgemeinen in geringen Mengen bei der Herstellung der Gummimischungen eingesetzt werden, dienen zur Erzielung einer geeigneten Plastizität während des Verarbeitungsprozesses (Extrusion, Spritzvorgang usw.), um die Mischung auf die gewünschten Erfordernisse einzustellen. Eine Beeinflussung der Härte der Vulkanisate ist durch diese Zusätze nicht bekannt. Auch der alleinige Einsatz solcher Harzsysteme ohne Russzugabe führt zu Vulkanisaten mit höherer Härte, Festigkeit und Spannungswerten als bei der Verwendung des Kautschuks allein. In der Praxis macht man sich die härtesteigernde Wirkung der Harze speziell für hochgefüllte Mischungen, die eine hohe Härte aufweisen müssen, zunutze. Bekanntlich weisen solche hochgefüllten und harten Vulkanisate, die ohne oder mit Zusatz von Phenolharz und Härtungsmittel hergestellt wurden, bei wiederholten mechanischen Verformungen eine wesentlich stärkere Wärmeentwicklung auf als niedriggefüllte und weiche Vulkanisate.

Bei einer Reihe von Anwendungen, z. B. für Reifenlaufflächen, werden hochgefüllte Mischungen mit niedriger Härte benötigt, zu deren Rezeptierung grössere Zusätze an weichmachenden Ölen von beispielsweise mehr als 15% erforderlich sind. (Mit % sind im folgenden stets Gewichtsprozent, bezogen auf Kautschuk gemeint, sofern nichts anderes angegeben wird.) Durch den hohen Ölgehalt kann man auch bei Verwendung von 70 und mehr % Russ Vulkanisathärten unter 65° Shore A erzielen. Würde man in diesen ölreichen Mischungen den Russ anteilmässig durch härtbare Phenolharzsysteme ersetzen, dann wäre aufgrund der oben geschilderten Erfahrungen bei Kautschukmischungen mit keinen oder geringen Ölgehalten zu erwarten, dass hierbei keine Vulkanisate mit niedriger Härte und geringer Wärmeentwicklung erhalten werden, da die Russ-Phenolharz-Systeme nach den bisherigen Erfahrungen noch höhere Härten und stärkere Erwärmung bewirken als Russ allein.

Überraschenderweise wurde aber gefunden, dass Vulkanisate mit niedrigen Härten, d.h. unter 65, insbesondere unter 62° Shore A, geringer Wärmeentwicklung und zusätzlich hoher Reissdehnung erhalten werden, wenn in hoch mit Russ gefüllten Mischungen, das sind solche mit einem Gehalt von mindestens 55, vorzugsweise mindestens 60 Gew.-Teile aktiver Füllstoffe, bei Gegenwart relativ grosser Mengen, das sind mindestens 10 Gew.-Teile, weichmachender Öle ein Teil der Russmenge durch ein Phenolharz und ein Härtungsmittel dafür ersetzt wird. Besonders deutlich ist dieser Effekt bei Styrol-Butadien- und/oder Naturkautschuk sowie Mischungen auf Basis dieser Kautschuke mit untergeordneten Mengen, das sind unter 50 Gew.-Teile, an anderen Kautschuktypen, die in grossen Mengen in der Reifenproduktion verwendet werden. Da bei der mechanischen Verformung von Vulkanisaten auf Kautschukmischungen gemäss dieser Erfindung eine geringere Wärmeentwicklung eintritt als bei den Mischungen nach dem Stand der Technik ohne Zusätze von Verstärkerharzen, wird ein geringerer Anteil an Energie in Wärme umgewandelt. Die Erfindung stützt sich auf diese überraschende Tatsache, die besonders bemerkenswert ist, weil solche Vulkanisate, die als aktiven Füllstoff nur die gleiche Menge Russ, aber keine Phenolharzsysteme als Verstärkerharze enthalten, ein ungünstigeres Verhalten zeigen.

Gegenstand der Erfindung sind also Kautschukvulkanisate auf der Basis von Mischungen, die mindestens 55 Gew.-Teile, vorzugsweise mindestens 60 und höchstens 160 Gew.-Teile, aktive Füllstoffe und mindestens 10 Gew.-Teile weichmachende Öle enthalten, mit Shore A-Härten unter 65° und insbesondere unter 62°, dadurch gekennzeichnet, dass 10 bis 60 Gew.-Teile weichmachende Öle enthalten sind und der aktive Füllstoff 30 bis 100 Gew.-Teile anorganische aktive Füllstoffe und 10 bis 60 Gew.-Teile an Phenolharzsystemen, bestehend aus Novolaken und Härtern dafür, enthält, wobei alle Mengenangaben auf 100 Gew.-Teile des Kautschuks bezogen sind und das Gewichtsverhältnis der aktiven anorganischen Füllstoffe zu den Phenolharzsystemen (9:1) bis (1:9) vorzugsweise (8:2) bis (2:8) und insbesondere bis (1:2) beträgt.

Gegenstand der Erfindung ist auch ein Verfahren zur Herstellung von Vulkanisaten mit Shore A Härten unter 65°, insbesondere unter 62°, in denen bei dynamischer Verformung nur ein verminderter Energieanteil in Wärme umgewandelt wird, dadurch gekennzeichnet, dass man Mischungen vulkanisiert, die mindestens 55, vorzugsweise mindestens 60 und höchstens 160 Gew.-Teile aktive Füllstoffe aus 30-100 Gew.-Teilen anorganischer aktiver Füllstoffe und wenigstens 10 bis höchstens 60 Gew.-Teilen an Phenolharzsystemen, die aus Novolaken und Härtern dafür bestehen, sowie 10 bis 60 Gew.-Teile weichmachende Öle enthalten, wobei alle Mengenangaben auf 100 Gew.-Teile des Kautschuks bezogen sind und das Gewichtsverhältnis der aktiven anorganischen Füllstoffe zu den Phenolharzsystemen (9:1) bis (1:9) beträgt.

Der Begriff «aktive Füllstoffe» schliesst ausser anorganischen Füllstoffen auch verstärkend wirkende Phenolharzsysteme – das sind Novolake zuzüglich Härtern – ein. Im allgemeinen liegt die Menge an aktiven anorganischen Füllstoffen einschliesslich Russ zwischen 30 und 100, vorzugsweise zwischen 35 und 80 Gew.-Teile, die an weichmachenden Ölen zwischen 10 und 60, vorzugsweise zwischen 15 und 50 Gew.-Teile. Die Menge an Phenolharzsystemen beträgt bevorzugt zwischen 15 und 50 Gew.-Teile. In den Phenolharzsystemen sind im allgemeinen 2 bis 50, vorzugsweise 5 bis 35% Härter zugegen, bezogen auf das Gewicht des Novolaks.

Geeignete Kautschuktypen sind beispielsweise Naturkautschuk, Butadien-Styrol-Kautschuk, Butadien-Acrylnitril-Kautschuk, Polybutadien, Polyisopren, Butylkautschuk, Äthylen-Propylen-Dien-Terpolymer-Kautschuk oder deren Gemische, wie sie gewöhnlich in der Reifenindustrie oder zur Herstellung technischer Gummiwaren verwendet werden. Styrol-Butadien- und/oder Naturkautschuk oder Mischungen dieser Kautschuktypen mit untergeordneten Mengen an anderen Kautschuktypen sind bevorzugt.

Geeignete Novolak-Harze sind z.B. solche, die aus Phenol und/oder mehrwertigen Ein- oder Mehrkernphenolen, wie Resorcin, Bisphenolen, z.B Diphenylolpropan und/oder Diphenylolmethan, oder mit einer Kohlenwasserstoffgruppe substituierten ein- oder mehrwertigen Phenolen, wie Alkyl- oder Aralkylphenolen mit z.B. 1 bis 20, vorzugsweise 4 bis 18 C-Atomen im Substituenten, wie tert.-Butylphenol, Octylphenol, Nonylphenol, Nierenbaum-(Cashew-)Nussschalenöl, styrolisiertem oder mit Fettsäuren, wie Leinölfettsäuren, modifiziertem Phenol, oder Phenylphenol und Aldehyden, wie Acetaldehyd, vorzugsweise aber Formaldehyd, im sauren Medium erhalten werden. Einsetzbar sind auch mit anorganischen Bestandteilen modifizierte Phenolharze zur Verstärkung von Kautschuk, z.B. mit Silizium-, Aluminium- oder Bor-Verbindungen modifizierte Typen. Die Novolake können ausserdem weichmachende Anteile, wie Polyäthylenglykole, Tallöl oder andere übliche Plastifiziermittel enthalten. Grundsätzlich können auch Novolake ausschliesslich aus mit Kohlenwasserstoffgruppen substituierten Phenolen, die eine Alkylgruppe von 1 bis 20 C-Atomen tragen, verwendet werden; dies gilt insbesondere für solche mit einem Alkylrest mit z.B. 1 bis 4 C-Atomen in m-Stellung zur phenolischen Hydroxylgruppe. Novolake aus solchen Phenolen allein, die einen Substituenten in ortho- oder para-Stellung enthalten, kommen jedoch nur bedingt in Frage, da sie weniger gut härtbar sind. Man verwendet diese daher bevorzugt in Mischungen mit trifunktionellen Phenolen, wie m-Kresol, insbesondere aber mit Phenol. Der Begriff «trifunktionelle Phenole» bezeichnet solche, in denen die ortho- und para-Stellungen zur phenolischen Hydroxylgruppe für Substitutionen durch Aldehyde zugänglich sind. Ferner kann die Phenolkomponente der Novolake Zusätze von mehreren Alkylgruppen enthaltenden Phenolen enthalten, wobei deren Menge z.B. bis zu 20 Mol-% beträgt. Für den praktischen Gebrauch sind Novolake aus Phenol und Gemischen aus Phenol und mit einer Kohlenwasserstoffgruppe substituierten Phenolen mit 4 bis 18 C-Atomen im Substituenten einschliesslich Nierenbaum-Nussschalenöl bevorzugt. Der Anteil der substituierten Phenole im Novolak kann dabei variieren, wobei jedoch der Novolak noch härtbar sein soll. Im allgemeinen liegt der Anteil der nicht-trifunktionellen Phenole am Gesamtgehalt der Phenole nicht höher als 80, vorzugsweise nicht höher als 65 Mol-%.

Als Härter können beliebige Formaldehyd abspaltende und/oder freie oder verätherte Methylolgruppen enthaltende Verbindungen verwendet werden, z.B. Aminharze, wie Harnstoffharze oder Benzoguanaminharze. Bevorzugt sind aber Hexamethylentetramin sowie Melaminharze, letztere in Form von zumindest teilweise verätherten Tri-, Tetra-, Penta- oder Hexamethylol-Melaminharzen oder entsprechenden höherkondensierten mehrkernigen Produkten, und insbesondere Hexamethoxymethylmelamin. Der Kondensationsgrad der Aldehyd-, insbesondere Formaldehyd-Harze und ihr Gehalt an freien Methylolgruppen kann in weiten Grenzen schwanken. Die freien Methylolgruppen können mit einwertigen Alkoholen mit 1 bis 12, vorzugsweise mit 1 bis 8 C-Atomen veräthert sein, wie Methanol, Äthanol, den verschiedenen Propanolen, Butanolen, Hexanolen, Octanolen, wie Äthylhexanol und n-Octanol, Nonanolen, Dodecylalkohol.

Die zur Härtung der Novolak-Harze erforderlichen optimalen Mengen Härtungsmittel müssen in Vorversuchen, die einfach durchzuführen sind, ermittelt werden. Im allgemeinen werden etwa 2 bis 50, vorzugsweise 5 bis 35 Gew.% Melaminharz oder 2 bis 30, vorzugsweise 2 bis 25 Gew.% Hexamethylentetramin verwendet, bezogen auf Novolak.

Als weichmachende Öle eignen sich die in der Kautschuktechnik üblichen Produkte, insbesondere naphthenische und aromatische Öle.

Als aktive Füllstoffe können die handelsüblichen aktiven Russe und Kieselsäuren verwendet werden. Vorzugsweise bestehen sie wenigstens überwiegend aus Russ. Als inaktive Füllstoffe eignen sich ebenfalls handelsübliche Russe und Kieselsäuren, ferner Kaoline, Kreide und andere übliche Füllstoffe. Die Vulkanisation kann ohne Schwefel und mit Vulkanisationsharzen erfolgen. Die Vulkanisation in Gegenwart von Schwefel ist aber bevorzugt. Ihr Verlauf kann durch Auswahl geeigneter, in der Kautschuktechnologie üblicher Beschleuniger, Aktivatoren und Regler den praktischen Erfordernissen angepasst werden. Ferner werden vorteilhaft noch Alterungsschutzmittel zur Verbesserung der Eigenschaften der Vulkanisate zugesetzt.

Die erfindungsgemäss eingesetzten Ausgangsmischungen können in üblicher Weise in Innenmischern oder auf Mischwalzen hergestellt werden. Beim Einarbeiten der Harze kann es von Vorteil sein, wenn die Mischungstemperatur in irgendeiner Phase der Mischungsherstellung den Schmelzpunkt der Harze, insbesondere der Novolakharze überschreitet, damit sich diese völlig verteilen können. Ferner ist wichtig, dass die Härtungsmittel so eingearbeitet werden, dass es nicht zu einer vorzeitigen Eigenkondensation oder zu einer vorzeitigen Reaktion mit dem zu härtenden Novolak kommt. Das ist möglich, wenn die Härtungsmittel am Ende des Mischvorganges bei nicht zu hohen Temperaturen (im allgemeinen bei 80 bis 120°C) eingearbeitet werden.

Die erfindungsgemäss erhaltenen Vulkanisate können z.B. als technische Gummiwaren wie Dämpfungselemente, Gummimanschetten, Beläge oder auch für Reifen verwendet werden. Die nachfolgend beschriebenen Versuche dienen zur Erläuterung der Zusammensetzung und der Eigenschaften der erfindungsgemässen Gummimischungen. Hierbei wurde ein handelsüblicher Styrol-Butadien-Kautschuk mit 23,5% gebundenem Styrol eingesetzt, der noch einen Emulgator auf Basis von Harz- und Fettsäuren enthielt. Als aktiver Russ wurde ein HAF-Typ eingesetzt und als Weichmacher ein naphthenisches Öl, welches mit dem Kautschuk vorgemischt war. Das in den Tabellen als Phenolharz A bezeichnete Produkt stellt einen handelsüblichen Phenolnovolak mit einem Schmelzbereich zwischen 83 und 88° C nach der Kapillarmethode (DIN 53181) und einer Viskosität der 40%igen Lösung in Äthylenglykolmonoäthyläther bei 20°C von 180 bis 250 mPa s dar, während das Phenolharz B ein üblicher, mit Aralkylphenol modifizierter Phenolnovolak mit einem Schmelzbereich von 80 bis 90°C und einer Viskosität der 50%igen Lösung in Äthylenglykolmonoäthyläther bei 20°C von 600 bis 1000 mPa s ist. Als Härtungsmittel wurde Hexamethylentetramin (Hexa) verwendet. Die Mischungen wurden auf einer Mischwalze hergestellt und hierbei der Beschleuniger und das Hexa am Schluss bei Temperaturen unter 120°C eingemischt. Die Vulkanisation erfolgte in 30 min bei 150°C.

Die erhaltenen Probekörper wurden auf folgende Eigenschaften nach den in der Praxis üblichen Prüfmethoden untersucht:
Reissfestigkeit, Reissdehnung und Spannungswerte (bei 50% sowie 100% Dehnung) gemäss DIN 53 504;
Härte Shore A nach DIN 53505;
Rückprallelastizität nach DIN 53512;
Druckverformungsrest nach DIN 53517;
Temperaturanstieg nach 10 min Belastung in einem Rollbiege-Prüfgerät, wobei ein Prüfzylinder von 20 mm Durchmesser und 100 mm Länge unter einem Auslenkungswinkel eines Endes von 45° bei einer Umdrehungszahl pro Minute von ca. 1400 dynamisch verformt wird;
Temperaturanstieg und bleibende Verformung im Kompressions-Flexometer nach DIN 53533, Teil 3 entsprechend ASTM D 623, Methode A (Goodrich-Flexometer);
Plastizität der unvulkanisierten Mischungen im Scherscheiben-Viskometer nach Mooney gemäss DIN 53524.

Beispiele
Die Untersuchungen erfolgten mit Mischungen, deren Zusammensetzung aus den Tabellen 1 und 2 zu ersehen ist. Darin sind auch die Prüfergebnisse gegenübergestellt, wobei folgende Beispiele angeführt sind:
Vergleiche A und B, die die Wirkung von Russ oder Phenolharz jeweils allein in Gegenwart von Weichmacheröl zeigen;
Versuche 1 bis 9 mit erfindungsgemässen Mischungen, die Russ, Phenolharz und Weichmacheröl enthalten;
Zusatzvergleiche C bis E, die in einer abgewandelten Formulierung auf Basis Naturkautschuk ohne Weichmacheröl den Effekt des teilweisen Austausches von Russ durch Phenolharz verdeutlichen.

Diskussion der Ergebnisse
Aus der Tabelle ist zu ersehen, dass die erfindungsgemässen Mischungen 1 bis 9 deutlich höhere Dehnungen als die Vergleichsmischungen ergaben. Die Festigkeit liegt in derselben Grössenordnung wie bei den Vergleichen A, C, D, E und F und ist somit eindeutig besser als bei Vergleich B.

Mit zunehmendem Ersatz von Russ durch Phenolharz in den Versuchen 1 bis 3 und 7 bis 9 nehmen die Spannungswerte ab, fallen aber bei Versuchen 1 bis 3 nicht auf den tiefen Wert des Vergleiches B ohne Russzusatz. Sehr deutlich zeigt sich der gewünschte Effekt der abnehmenden Härte, so dass der Vorteil der Weichheit dieser Versuchsmischungen offenbar wird. Dies ist insofern überraschend, als im Gegensatz hierzu bei den ohne Weichmacheröl formulierten Zusatzvergleichen C bis E der Ersatz von Russ durch Phenolharz zu höheren Härten führt.

Der hohe Druckverformungsrest, der durch den Ölgehalt bei dem harzfreien Vergleich A gegenüber C bewirkt wird, liegt in den Versuchen 1 bis 3 nicht viel höher als der Wert von A und fällt etwas in dieser Reihe ab, während die Mischungen D und E mit steigender Tendenz erheblich über dem Wert von C liegen, so dass in letzteren ein negativer Effekt des Phenolharzes eintritt. Der geringe Temperaturanstieg bei der Rollbiegeprüfung der Versuche 1 bis 6 von nur maximal 42°C im Vergleich zu A und B mit 38°C und der Versuche 7 bis 9 von nur maximal 48°C im Vergleich zu F mit 55°C zeigt den überraschenden Vorteil der erfindungsgemässen Mischungen, da bei ölfreien Systemen wie bei D bzw. E durch den Harzzusatz ein Temperaturanstieg von 106 bzw. 141°C bewirkt wird gegenüber harzfreien Proben mit Russ allein (Probe C) und mit 46°C und derselbe Einfluss bei den Formulierungen 1 bis 9 erwartet werden müsste.

Ähnliche Ergebnisse, aber mit etwas anderer Reihung, liefert die Prüfung im Flexometer nach Goodrich, wobei der Versuch 3 hinsichtlich dieser Prüfmethode nicht mehr im Optimum liegt.

Die bleibende Verformung der Versuche 1 und 2 nach der Belastung im Goodrich-Flexometer ist etwas höher als beim Vergleich A, erreicht aber bei weitem nicht die Steigerung der Vergleiche D und E gegenüber C.

Analoge Ergebnisse wie mit dem Phenolharz A bei den Versuchen 1 bis 3 werden auch mit dem Phenolharz B erhalten, wobei die dem Versuch 2 analoge Formulierung des Versuchs 4 mit Harz B eine etwas geringere Dehnung, höhere Spannungswerte sowie Härte, aber niedrigeren Druckverformungsrest und, was vorteilhaft ist, niedrigere Temperaturanstiege sowie relativ geringe bleibende Verformung ergibt. Die Versuche 5 und 6 mit höherem Harzgehalt bei gleicher bzw. gesenkter Russmenge verdeutlichen dieselbe Tendenz der Befunde in variierten Formulierungen.

Ausser den Vorteilen in den Eigenschaften der Vulkanisate haben die unvulkanisierten Mischungen der Versuche 1 bis 6 und 7 bis 9 gegenüber den Vergleichen A, C, D und E bzw. F eine wesentlich niedrigere Mooney-Plastizität. Sie können deshalb mit geringerem Kraftaufwand verarbeitet werden und besitzen eine bessere Fliessfähigkeit, z.B. in Formen oder Extrudern.

Somit lässt sich zusammenfassend sagen, dass die erfindungsgemässen Mischungen gegenüber dem Stand der Technik entsprechend den Vergleichen A bis C den Vorteil der höheren Dehnbarkeit, niedrigerer Härte, besserer Plastizität und in bestimmten optimierten Formulierungen auch geringerer Wärmeentwicklung unter dynamischer Verformung bei sonst ähnlich bzw. nicht wesentlich ungünstigeren übrigen Eigenschaften aufweisen. Gegenüber den Zusatzvergleichen mit den harzhaltigen Mischungen nach dem heutigen technischen Stand D und E besitzen die erfindungsgemässen Mischungen wesentlich höhere Dehnungen, niedrigere Härten und Wärmeentwicklung sowie deutlich günstigere Plastizität.

Tabelle 1

Grundmischung (in Gewichtsteilen = T): 100 Styrol-Kautschuk, 37,5 Weichmacheröl, 3 ZnO, 1,5 Stearinsäure, 2 Alterungsschutzmittel (gleiche Teile eines nicht verfärbenden Chinolinderivats und N-Isopropyl-N'-phenyl-p-phenylen-diamin), 1,8 Schwefel, 2 N-Cyclohexyl-2-benzothiazolsulfenamid.

| | | Vergleich | | Versuch | | | | | | Zusatz-Vergleich* | | |
| | | A | B | 1 | 2 | 3 | 4 | 5 | 6 | C | D | E |
|---|---|---|---|---|---|---|---|---|---|---|---|---|
| Styrol-Kautschuk | T | 100 | 100 | 100 | 100 | 100 | 100 | 100 | 100 | 100 | 100 | 100 |
| Weichmacheröl | T | 37,5 | 37,5 | 37,5 | 37,5 | 37,5 | 37,5 | 37,5 | 37,5 | – | – | – |
| Russ HAF | T | 75 | – | 55 | 40 | 30 | 40 | 40 | 30 | 70 | 60 | 50 |
| Phenolharz A | T | – | 67,5 | 18 | 31,5 | 40,5 | – | – | – | – | 9 | 18 |
| Phenolharz B | T | – | – | – | – | – | 31,5 | 36 | 36 | – | – | – |
| Hexa | T | – | 7,5 | 2 | 3,5 | 4,5 | 3,5 | 4 | 4 | – | 1 | 2 |
| Mooney-Plastizität bei 120°C (1+4) | (Einh.) | 44 | 10 | 33 | 20 | 17 | 24 | 22 | 20 | 57 | 55 | 42 |
| Festigkeit | (mPa) | 18,4 | 2,0 | 19,3 | 15,6 | 12,3 | 16,7 | 15,0 | 11,8 | 12,9 | 14,5 | 12,7 |
| Dehnung | (%) | 311 | 334 | 410 | 612 | 613 | 531 | 512 | 552 | 187 | 240 | 243 |
| Spannungswert 100% | (mPa) | 3,3 | 1,8 | 3,5 | 2,5 | 2,2 | 4,0 | 2,9 | 2,7 | 5,4 | 5,8 | 5,2 |
| Härte Shore A | (°) | 62 | 72 | 62 | 56 | 52 | 60 | 59 | 55 | 77 | 80 | 89 |
| Rückprallelastizität | (%) | 32 | 47 | 32 | 39 | 44 | 38 | 39 | 43 | 36 | 38 | 38 |
| Druckverformungsrest | (%) | 44 | 57 | 51 | 49 | 48 | 46 | 47 | 42 | 27 | 48 | 64 |
| Temperaturanstieg: 10' Rollbiegeprüfung | (°C) | 38 | 37 | 39 | 42 | 34 | 35 | 38 | 25 | 46 | 106 | 141 |
| Goodrich-Flexometer | (°C) | 24 | zerstört | 23 | 22 | 37 | 20 | 29 | 17 | 27 | 44 | 43 |
| Bleibende Verformung nach Goodrich | (%) | 7,8 | zerstört | 8,1 | 11,9 | zerstört | 9,3 | 15,9 | 10,1 | 3,5 | 18,6 | 32,9 |

* Zusatz-Vergleiche, Grundmischung (in T): 100 Naturkautschuk, 5 ZnO, 1,5 Stearinsäure, 2 Alterungsschutzmittel (wie oben), 2,5 Schwefel, 0,9 N-Cyclohexyl-2-benzothiazolsulfenamid, 0,3 Tetramethylthiurammonosulfid.

0 090 387

Tabelle 2

Grundmischung wie bei Zusatzvergleichen C bis E.

| | | Vergleich F | Versuch 7 | 8 | 9 |
|---|---|---|---|---|---|
| Naturkautschuk | T | 100 | 100 | 100 | 100 |
| Weichmacheröl | T | 15 | 15 | 15 | 15 |
| Russ HAF | T | 70 | 50 | 40 | 30 |
| Phenolharz B | T | – | 18 | 27 | 36 |
| Hexa | T | – | 2 | 3 | 4 |
| Mooney-Plastizität bei 120°C (1–4) | (Einh.) | 17 | 14 | 14 | 14 |
| Festigkeit | (mPa) | 17,3 | 20,0 | 18,6 | 15,9 |
| Dehnung | (%) | 226 | 374 | 424 | 414 |
| Spannungswert 100% | (mPa) | 5,9 | 4,0 | 2,5 | 2,8 |
| Härte Shore A | (°) | 69 | 64 | 57 | 46 |
| Rückprallelastizität | (%) | 28 | 36 | 37 | 39 |
| Druckverformungsrest | (%) | 54 | 64 | 61 | 61 |
| Temperaturanstieg: | | | | | |
| 10' Rollbiegeprüfung | (°C) | 55 | 48 | 38 | 24 |
| Goodrich-Flexometer | (°C) | 32 | 38 | 20 | 16 |

**Patentansprüche für die Vertragsstaaten: BE, CH, DE, FR, GB, IT, LU, LI**

1. Kautschukvulkanisate auf der Basis von Mischungen, die mindestens 55 Gew.-Teile aktive Füllstoffe und mindestens 10 Gew.-Teile weichmachende Öle enthalten, mit Shore A-Härten unter 65°, dadurch gekennzeichnet, dass 10 bis 60 Gew.-Teile weichmachende Öle enthalten sind und der aktive Füllstoff 30 bis 100 Gew.-Teile anorganische aktive Füllstoffe und 10 bis 60 Gew.-Teile an Phenolharzsystemen, bestehend aus Novolaken und Härtern dafür, enthält, wobei alle Mengenangaben auf 100 Gew.-Teile des Kautschuks bezogen sind und das Gewichtsverhältnis der aktiven anorganischen Füllstoffe zu den Phenolharzsystemen (9:1) bis (1:9) beträgt.

2. Verfahren zur Herstellung von Vulkanisaten mit Shore A-Härten unter 65°, in denen bei dynamischer Verformung nur ein verminderter Energieanteil in Wärme umgewandelt wird, dadurch gekennzeichnet, dass man Mischungen vulkanisiert, die mindestens 55 Gew.-Teile aktive Füllstoffe aus 30 bis 100 Gew.-Teilen anorganischer aktiver Füllstoffe und wenigstens 10 bis höchstens 60 Gew.-Teilen an Phenolharzsystemen, die aus Novolaken und Härtern dafür bestehen, sowie 10 bis 60 Gew.-Teile weichmachende Öle enthalten, wobei alle Mengenangaben auf 100 Gew.-Teile des Kautschuks bezogen sind und das Gewichtsverhältnis der aktiven anorganischen Füllstoffe zu den Phenolharzsystemen (9:1) bis (1:9) beträgt.

3. Ausführungsform nach Anspruch 1 oder 2, dadurch gekennzeichnet, dass die Shore A-Härte der Vulkanisate unter 62° liegt.

4. Ausführungsform nach einem oder mehreren der Ansprüche 1 bis 3, dadurch gekennzeichnet, dass die Menge der aktiven Füllstoffe 60 bis 160 Gew.-Teile beträgt und das Gewichtsverhältnis der aktiven anorganischen Füllstoffe zu den Phenolharzsystemen (8:2) bis (2:8) und insbesondere bis (1:2) beträgt.

5. Ausführungsform nach einem oder mehreren der Ansprüche 1 bis 4, dadurch gekennzeichnet, dass die Menge der aktiven anorganischen Füllstoffe zwischen 35 und 80 Gew.-Teile, die der Phenolharzsysteme zwischen 15 und 50 Gew.-Teile, die der weichmachenden Öle zwischen 15 und 50 Gew.-Teile und die des Härters 2 bis 50, vorzugsweise 5 bis 35% beträgt, wobei die Menge des Härters auf das Gewicht des Novolaks bezogen ist.

6. Ausführungsform nach einem oder mehreren der Ansprüche 1 bis 5, dadurch gekennzeichnet, dass als Härter 2 bis 50, vorzugsweise 5 bis 35% Melaminharz oder 2 bis 30, vorzugsweise 2 bis 25% Hexamethylentetramin, jeweils bezogen auf das Gewicht des Novolaks, verwendet werden.

7. Ausführungsform nach einem oder mehreren der Ansprüche 1 bis 6, dadurch gekennzeichnet, dass der aktive anorganische Füllstoff wenigstens überwiegend aus Russ besteht.

8. Ausführungsform nach einem oder mehreren der Ansprüche 1 bis 7, dadurch gekennzeichnet, dass der Kautschuk aus Styrol-Butadien- und/oder Naturkautschuk oder Mischungen dieser Kautschuktypen mit untergeordneten Mengen an anderen Kautschuktypen besteht.

9. Ausführungsform nach einem oder mehreren der Ansprüche 1 bis 8, dadurch gekennzeichnet, dass die Novolake aus Phenol bzw. dessen Gemischen mit solchen Phenolen, die mit einer Kohlenwasserstoffgruppe substituiert sind, einerseits und Formaldehyd andererseits aufgebaut sind.

10. Technische Gummiwaren und Reifen, die aus bzw. unter Verwendung von Kautschukvulkanisaten nach einem oder mehreren der Ansprüche 1 und 3 bis 9 oder solchen, die nach dem Verfahren des Anspruchs 2 erhalten worden sind, hergestellt sind.

**Patentansprüche für den Vertragsstaat: AT**

1. Verfahren zur Herstellung von Vulkanisaten mit Shore A-Härten unter 65°, in denen bei dynamischer Verformung nur ein verminderter Energieanteil in Wärme umgewandelt wird, dadurch gekennzeichnet, dass man Mischungen vulkanisiert, die mindestens 55 Gew.-Teile aktive Füllstoffe aus 30 bis 100 Gew.-Teilen anorganischer aktiver Füllstoffe und wenigstens 10 bis höchstens 60 Gew.-Teile an Phenolharzsystemen, die aus Novolaken und Härtern dafür bestehen, sowie 10 bis 60 Gew.-Teile weichmachende Öle enthalten, wobei alle Mengenangaben auf 100 Gew.-Teile des Kautschuks bezogen sind und das Gewichtsverhältnis der aktiven anorganischen Füllstoffe zu den Phenolharzsystemen (9:1) bis (1:9) beträgt.

2. Verfahren nach Anspruch 1, dadurch gekennzeichnet, dass die Shore A-Härte der Vulkanisate unter 62° liegt.

3. Verfahren nach Anspruch 1 oder 2, dadurch gekennzeichnet, dass die Menge der aktiven Füllstoffe 60 bis 160 Gew.-Teile beträgt und das Gewichtsverhältnis der aktiven anorganischen Füllstoffe zu den Phenolharzsystemen (8:2) bis (2:8) und insbesondere bis (1:2) beträgt.

4. Verfahren nach einem oder mehreren der Ansprüche 1 bis 3, dadurch gekennzeichnet, dass die Menge der aktiven anorganischen Füllstoffe zwischen 35 und 80 Gew.-Teile, die der Phenolharzsysteme zwischen 15 und 50 Gew.-Teile, die der weichmachenden Öle zwischen 15 und 50 Gew.-Teile und die des Härters 2 bis 50, vorzugsweise 5 bis 35% beträgt, wobei die Menge des Härters auf das Gewicht des Novolaks bezogen ist.

5. Verfahren nach einem oder mehreren der Ansprüche 1 bis 4, dadurch gekennzeichnet, dass als Härter 2 bis 50, vorzugsweise 5 bis 35% Melaminharz oder 2 bis 30, vorzugsweise 2 bis 25% Hexamethylentetramin, jeweils bezogen auf das Gewicht des Novolaks, verwendet werden.

6. Verfahren nach einem oder mehreren der Ansprüche 1 bis 5, dadurch gekennzeichnet, dass der aktive anorganische Füllstoff wenigstens überwiegend aus Russ besteht.

7. Verfahren nach einem oder mehreren der Ansprüche 1 bis 6, dadurch gekennzeichnet, dass der Kautschuk aus Styrol-Butadien- und/oder Naturkautschuk oder Mischungen dieser Kautschuktypen mit untergeordneten Mengen an anderen Kautschuktypen besteht.

8. Verfahren nach einem oder mehreren der Ansprüche 1 bis 7, dadurch gekennzeichnet, dass die Novolake aus Phenol bzw. dessen Gemischen mit solchen Phenolen, die mit einer Kohlenwasserstoffgruppe substituiert sind, einerseits und Formaldehyd andererseits aufgebaut sind.

9. Technische Gummiwaren und Reifen, die aus bzw. unter Verwendung von Kautschukvulkanisaten, die nach dem Verfahren eines oder mehrerer der Ansprüche 1 bis 8 erhalten worden sind, hergestellt sind.

**Claims for the Contracting states: BE, CH, DE, FR, GB, IT, LU, LI**

1. Rubber vulcanisates having a Shore A hardness below 65° and being based on compositions comprising at least 10 parts by weight of plasticizing oils and at least 55 parts by weight of active fillers characterized in that they contain 10 to 60 parts by weight of plasticizing oils, and the active fillers contain 30 to 100 parts by weight of inorganic active fillers and 10 to 60 parts by weight of phenolic resin systems, which consist of novolaks and hardeners therefor, the weight ratio between the active inorganic fillers and the phenolic resin systems being in the range from (9:1) to (1:9), all amounts being referred to 100 parts by weight of the rubber.

2. A process for the manufacture of vulcanisates having a Shore A hardness below 65° in which, upon dynamic deformation, only a reduced portion of the energy is converted into heat, characterized in that mixtures are vulcanized, which contain at least 55 parts by weight of active fillers of form 30 to 100 parts by weight inorganic active fillers and at least 10 to at most 60 parts by weight of phenolic resin systems, which consist of novolaks and hardeners therefor, and 10 to 60 parts by weight of plasticizing oils, the weight ratio between the active inorganic fillers and the phenolic resin systems being in the range from (9:1) to (1:9) and all amounts being referred to 100 parts by weight of the rubber.

3. Embodiment as claimed in claim 1 or 2 characterized in that the Shore A hardness of the vulcanisates is below 62°.

4. Embodiment as claimed in one or more of claims 1 to 3, characterized in that the amount of the active fillers is in the range from 60 to 160 parts by weight and the weight ratio of the active inorganic fillers to the phenolic resin systems is from (8:2) to (2:8), preferably to (1:2).

5. Embodiment as claimed in one or more of claims 1 to 4, characterized in that the amount of the active inorganic fillers is in the range between 35 and 80 parts by weight, that of the phenolic resin systems is between 15 and 50 parts by weight, that of the plasticizing oils is between 15 and 50 parts by weight and that of the hardener is between 2 and 50, preferably between 5 and 35%, the amount of the hardener being referred to the weight of the novolak.

6. Embodiment as claimed in one or more of claims 1 to 5, characterized in that as a hardener 2 to 50, preferably 5 to 35% of a melamine resin or 2 to 30, preferably 2 to 25% of hexamethylene tetramine is used, each referred to the weight of the novolak.

7. Embodiment as claimed in one or more of claims 1 to 6, characterized in that the active inorganic filler consists at least predominantly of carbon black.

8. Embodiment as claimed in one or more of claims 1 to 7, characterized in that the rubber is styrene-butadiene-rubber and/or natural rubber or a mixture of any of these rubbers with an inferior amount of other rubber types.

9. Embodiment as claimed in one or more of claims 1 to 8, characterized in that the novolak used is derived from phenol or a mixture thereof with such phenols which are substituted by a hydrocarbon group, on the one hand, and formaldehyde on the other hand.

10. Technical rubber articles and tires produced from or with the use of rubber vulcanisates as claimed in one or more of claims 1 and 3 to 9 or obtained according to the process as claimed in claim 2.

**Claims for the Contracting state: AT**

1. A process for the manufacture of vulcanisates having a Shore A hardness below 65° in which, upon dynamic deformation, only a reduced portion of the energy is converted into heat, characterized in that mixtures are vulcanized, which contain at least 55 parts by weight of active fillers of form 30 to 100 parts by weight inorganic active fillers and at least 10 to at most 60 parts by weight of phenolic resin systems, which consist of novolaks and hardeners therefor, and 10 to 60 parts by weight of plasticizing oils, the weight ratio between the active inorganic fillers and the phenolic resin systems being in the range from (9:1) to (1:9) and all amounts being referred to 100 parts by weight of the rubber.

2. A process as claimed in claim 1, characterized in that the Shore A hardness of the vulcanisates is below 62°.

3. A process as claimed in claim 1 or 2, characterized in that the amount of the active fillers is in the range from 60 to 160 parts by weight and the weight ratio of the active inorganic fillers to the phenolic resin systems is from (8:2) to (2:8), preferably to (1:2).

4. A process as claimed in one or more of claims 1 to 3, characterized in that the amount of the active inorganic fillers is in the range between 35 and 80 parts by weight, that of the phenolic resin systems is between 15 and 50 parts by weight, that of the plasticizing oils is between 15 and 50 parts by weight and that of the hardener is between 2 and 50, preferably between 5 and 35%, the amount of the hardener being referred to the weight of the novolak.

5. A process as claimed in one or more of claims 1 to 4, characterized in that as a hardener 2 to 50, preferably 5 to 35% of a melamine resin or 2 to 30, preferably 2 to 25% of hexamethylene tetramine is used, each referred to the weight of the novolak.

6. A process as claimed in one or more of claims 1 to 5, characterized in that the active inorganic filler consists at least predominantly of carbon black.

7. A process as claimed in one or more of claims 1 to 6, characterized in that the rubber is styrene-butadiene-rubber and/or natural rubber or a mixture of any of these rubbers with an inferior amount of other rubber types.

8. A process as claimed in one or more of claims 1 to 7, characterized in that the novolak used is constituted from phenol or a mixture thereof with such phenols which are substituted by a hydrocarbon group, on the one hand, and formaldehyde on the other hand.

9. Technical rubber articles and tires produced from or with the use of rubber vulcanisates obtained according to a process as claimed in one or more of claims 1 to 8.

**Revendications pour les Etats contractants: BE, CH, DE, FR, GB, IT, LU, LI**

1. Vulcanisats de caoutchouc à base de mélanges qui contiennent au moins 55 parties en poids de charges actives et au moins 10 parties en poids d'huiles plastifiantes, avec des duretés Shore A inférieures à 65°, caractérisés en ce qu'ils contiennent 10 à 60 parties en poids d'huiles plastifiantes et en ce que la charge active contient 30 à 100 parties en poids de charges actives minérales et 10 à 60 parties en poids de systèmes de résine phénolique constitués de novolaques et de durcisseurs pour celles-ci, toutes les indications de quantités se rapportant à 100 parties en poids de caoutchouc, et le rapport pondéral des charges minérales actives aux systèmes de résine phénolique étant de 9:1 à 1:9.

2. Procédé de préparation de vulcanisats ayant des duretés Shore A inférieures à 65°, dans lesquels en cas de déformation dynamique, seule une partie réduite de l'énergie est transformée en chaleur, caractérisé en ce qu'on vulcanise des mélanges qui contiennent au moins 55 parties en poids de charges actives constituées de 30 à 100 parties en poids de charges actives minérales et d'au moins 10 à au plus 60 parties en poids de systèmes de résine phénolique qui se composent de novolaques et de durcisseurs, ainsi que 10 à 60 parties en poids d'huiles plastifiantes, toutes les indications de quantités se rapportant à 100 parties en poids du caoutchouc et le rapport pondéral des charges minérales actives aux systèmes de résine phénolique étant de 9:1 à 1:9.

3. Mode de réalisation suivant les revendications 1 ou 2, caractérisé en ce que la dureté Shore A des vulcanisats est inférieure à 62°.

4. Mode de réalisation suivant une ou plusieurs des revendications 1 à 3, caractérisé en ce que la quantité de charges actives est de 60 à 160 parties en poids et en ce que le rapport pondéral des charges minérales actives aux systèmes de résine phénolique est de 8:2 à 2:8 et en particulier jusqu'à 1:2.

5. Mode de réalisation suivant une ou plusieurs des revendications 1 à 4, caractérisé en ce que la quantité des charges minérales actives est entre 35 et 80 parties en poids, celle des systèmes de résine phénolique entre 15 et 50 parties en poids, celle des huiles plastifiantes entre 15 et 50 parties en poids et celle du durcisseur de 2 à 50, de préférence de 5 à 35%, la quantité du durcisseur étant rapportée au poids de la novolaque.

6. Mode de réalisation suivant une ou plusieurs des revendications 1 à 5, caractérisé en ce qu'on utilise comme durcisseur 2 à 50, de préférence 5 à 35% de résine mélamine ou 2 à 30, de préférence 2 à 25% d'hexaméthylènetétramine, rapportés à chaque fois au poids de la novolaque.

7. Mode de réalisation suivant une ou plusieurs des revendications 1 à 6, caractérisé en ce que la charge minérale active se compose au moins principalement de noir de carbone.

8. Mode de réalisation suivant une ou plusieurs des revendications 1 à 7, caractérisé en ce que le caoutchouc se compose de caoutchouc styrène-butadiène et/ou de caoutchouc naturel ou de mélange de ces caoutchoucs avec des quantités infimes d'autres types de caoutchouc.

9. Mode de réalisation suivant une ou plusieurs des revendications 1 à 8, caractérisé en ce que les novolaques sont constitués de phénol ou de mélange de celui-ci avec des phénols qui sont substitués par un groupe hydrocarboné, d'une part et de formaldéhyde d'autre part.

10. Article technique en caoutchouc et pneumatiques qui sont fabriqués en utilisant des vulcanisats de caoutchouc suivant une ou plusieurs des revendications 1 et 3 à 9, ou qui ont été obtenus par le procédé de la revendication 2.

**Revendications pour l'Etat contractant: AT**

1. Procédé de fabrication de vulcanisats ayant une dureté Shore A inférieure à 65°, dans lequel, en cas de déformation dynamique, seule une fraction réduite de l'énergie est transformée en chaleur, caractérisé en ce qu'on vulcanise des mélanges qui contiennent au moins 55 parties en poids de charges actives constituées de 30 à 100 parties en poids de charges actives minérales et d'au moins 10 à au plus 60 parties en poids de systèmes de résine phénolique qui se composent de novolaques et de durcisseurs pour celles-ci, ainsi que 10 à 60 parties en poids d'huiles plastifiantes, toutes les indications de quantité se rapportant à 100 parties en poids du caoutchouc, et le rapport pondéral des charges minérales actives aux systèmes de résine phénolique étant de 9:1 à 1:9.

2. Procédé suivant la revendication 1, caractérisé en ce que la dureté Shore A des vulcanisats est inférieure à 62°.

3. Procédé suivant les revendications 1 ou 2, caractérisé en ce que la quantité des charges actives est de 60 à 160 parties en poids et en ce que le rapport pondéral des charges minérales actives aux systèmes de résine phénolique est de 8:2 à 2:8 et en particulier jusqu'à 1:2.

4. Procédé suivant une ou plusieurs des revendications 1 à 3, caractérisé en ce que la quantité des charges minérales actives est entre 35 et 80 parties en poids, celle des systèmes de résine phénolique entre 15 et 50 parties en poids, celle des huiles plastifiantes entre 15 et 50 parties en poids et celle du durcisseur de 2 à 50, de préférence de 5 à 35%, la quantité du durcisseur étant rapportée au poids de la novolaque.

5. Procédé suivant une ou plusieurs des revendications 1 à 4, caractérisé en ce qu'on utilise comme durcisseur 2 à 50, de préférence 5 à 35% de résine mélamine ou 2 à 30, de préférence 2 à 25% d'hexaméthylènetétramine, rapportés à chaque fois au poids de la novolaque.

6. Procédé suivant une ou plusieurs des revendications 1 à 5, caractérisé en ce que la charge minérale active se compose au moins principalement de noir de carbone.

7. Procédé suivant une ou plusieurs des revendications 1 à 6, caractérisé en ce que le caoutchouc se compose d'un caoutchouc styrène-butadiène et/ou de caoutchouc naturel ou de mélange de ces types de caoutchouc avec des quantités infimes d'autres types de caoutchouc.

8. Procédé suivant une ou plusieurs des revendications 1 à 7, caractérisé en ce que les novolaques sont constituées de phénol ou de ses mélanges avec des phénols qui sont substitués par un groupe hydrocarboné, d'une part, et de formaldéhyde d'autre part.

9. Articles techniques en caoutchouc et pneumatiques, qui sont fabriqués en utilisant des vulcanisats de caoutchouc qui ont été obtenus par le procédé suivant une ou plusieurs des revendications 1 à 8.